# EUROPEAN PATENT APPLICATION

(11) **EP 4 794 317 A1**
(43) Date of publication of application: **19.08.2026**
(21) Application number: 25197788.0
(22) Date of filing: 25.08.2025
(51) Int. Cl.: H04N 1/00, G03G 15/00, H04N 1/23

(54) **IMAGE FORMING CONTROL APPARATUS**

(30) Priority: 18.02.2025 JP 2025024507; 25.03.2025 JP 2025050661; 25.03.2025 JP 2025050774; 26.03.2025 JP 2025051607
(71) Applicant: FUJIFILM Business Innovation Corp., Minato-ku Tokyo (JP)
(72) Inventor: YOKOHASHI, Mami, Yokohama-shi, Kanagawa (JP); HORIKAWA, Kazuhiko, Yokohama-shi, Kanagawa (JP); MATSUO, Kota, Yokohama-shi, Kanagawa (JP); SAKAMOTO, Masaomi, Yokohama-shi, Kanagawa (JP); TABATA, Shinji, Yokohama-shi, Kanagawa (JP)
(74) Representative: Becker Kurig & Partner Patentanwälte mbB

(57) **Abstract**

An image forming control apparatus includes a processor configured to: acquire image information to be formed on a recording medium; acquire a physical property value related to a physical property of the recording medium; and execute control of forming an image corresponding to a type of the recording medium based on the image information and the physical property value.

## Description

### BACKGROUND OF THE INVENTION

### (i) Field of the Invention

The present invention relates to an image forming control apparatus.

### (ii) Description of Related Art

JP2019-214185A discloses a configuration of a recording medium discrimination section that performs recording medium discrimination by selecting any one of a first recording medium discrimination condition or a second recording medium discrimination condition in accordance with a job attribute identified by an identification section.

### SUMMARY OF THE INVENTION

In an image forming apparatus, a type of the recording medium is set by setting by a user or recognition by the image forming apparatus in order to define an image forming condition for the recording medium. In the setting by the user, for example, the user checks a catalog value of the recording medium and performs the setting. In addition, in the recognition by the image forming apparatus, the image forming apparatus sets the type of the recording medium based on, for example, a physical property value of the recording medium.

However, in a case where there is a recording medium having characteristics that do not fit the set type of the recording medium, even in a case where the type of the recording medium is set, the setting does not always result in a desired image forming condition.

An object of the present disclosure is to provide an image forming control apparatus that forms an image that is close to an image forming condition desired by a user even in a case where there is a recording medium having characteristics that do not fit a set type of the recording medium.

According to a first aspect of the present disclosure, there is provided an image forming control apparatus including: a processor configured to: acquire image information to be formed on a recording medium; acquire a physical property value related to a physical property of the recording medium; and execute control of forming an image corresponding to a type of the recording medium based on the image information and the physical property value.

According to a second aspect of the present disclosure, there is provided the image forming control apparatus according to according to the first aspect, in which the processor may be configured to: acquire recording medium type information that is information on the type of the recording medium from the physical property value; and execute, in a case where the acquired recording medium type information is not determined as predetermined types of recording media, control of forming the image under a setting condition for any one of the predetermined types of the recording media based on the acquired image information.

According to a third aspect of the present disclosure, there is provided the image forming control apparatus according to the second aspect, in which the image information may be information indicating an image amount, and the processor may be configured to: switch the setting condition in accordance with the image amount.

According to a fourth aspect of the present disclosure, there is provided the image forming control apparatus according to the second aspect, in which the processor may be configured to: grasp, in a case where the recording medium type information is not determined as the predetermined types of the recording media, a probability that the recording medium belongs to any one of the predetermined types of the recording media from the physical property value; and execute control of forming the image under the setting condition for any one of the predetermined types of the recording media based on the grasped probability.

According to a fifth aspect of the present disclosure, there is provided the image forming control apparatus according to the fourth aspect, in which the predetermined type may be any one of uncoated paper, embossed paper, coated paper, or matte coated paper, and the processor may be configured to: select, as a candidate, the recording medium of the one of the uncoated paper, embossed paper, the coated paper, or the matte coated paper based on the probability, and execute control of forming the image under the setting condition for forming the image on the recording medium of the one of the uncoated paper, embossed paper, the coated paper, or the matte coated paper based on information indicating an image amount in the image information.

According to a sixth aspect of the present disclosure, there is provided the image forming control apparatus according to the first aspect, in which the physical property value may be a physical property determined in advance as greatly affecting an image quality in a case where the image is formed on the recording medium.

According to a seventh aspect of the present disclosure, there is provided the image forming control apparatus according to the sixth aspect, in which the physical property value may be a value of at least any one of a basis weight, a smoothness, an electrical resistance, or a thickness of the recording medium, and the processor may be configured to: execute control of forming the image corresponding to the type of the recording medium based on the image information and the value.

According to the first aspect of the present disclosure, even in a case where there is the recording medium having the characteristics that do not fit the set type of the recording medium, the image that is close to the image forming condition desired by the user may be formed.

According to the second aspect of the present disclosure, the setting condition that is close to the image forming condition desired by the user may be set in consideration of the characteristics of the image.

According to the third aspect of the present disclosure, the setting may be switched to the setting condition for suppressing an image quality defect in accordance with the image amount.

According to the fourth aspect of the present disclosure, the setting condition may be accurately set for the recording medium of which the type is ambiguous.

According to the fifth aspect of the present disclosure, the options of the setting condition may be narrowed down from a wide variety of recording media, and the setting condition to be used among the options may be switched in consideration of the characteristics of the image.

According to the sixth aspect of the present disclosure, the control of the image formation may be efficiently performed by intensively evaluating the physical property value that greatly affects the image quality.

According to the seventh aspect of the present disclosure, advanced image formation corresponding to the type of the medium may be achieved by combining a plurality of physical property values.

### BRIEF DESCRIPTION OF THE DRAWINGS

Exemplary embodiment(s) of the present invention will be described in detail based on the following figures, wherein:
FIG. 1 is a diagram showing an image forming control apparatus to which the present exemplary embodiment is applied;
FIG. 2 is a diagram showing a medium measurement device;
FIG. 3 is a hardware configuration of a control section and the medium measurement device;
FIG. 4 is a functional configuration diagram of the control section;
FIG. 5 is a flowchart showing a flow of processing of the control section in a case of setting a setting condition for image formation on a type of the paper;
FIG. 6 is a diagram showing the setting condition for the image formation on predetermined types of the paper by a paper type setting section;
FIGS. 7A to 7C are diagrams showing analysis of a feature value of a job image in a job image analysis section;
FIGS. 8A and 8B are diagrams showing examples of acquisition of paper type information by a paper type information acquisition section;
FIGS. 9A to 9D are display screens in a case where the feature value of the job image is acquired in a case of setting the setting condition for the image formation on the type of the paper; and
FIGS. 10A to 10C are display screens in a case where the setting condition for the type of the paper is changed without displaying the setting condition on the display screen in a case of performing the image formation.

### DETAILED DESCRIPTION OF THE INVENTION

### [Description of Image Forming Control Apparatus]

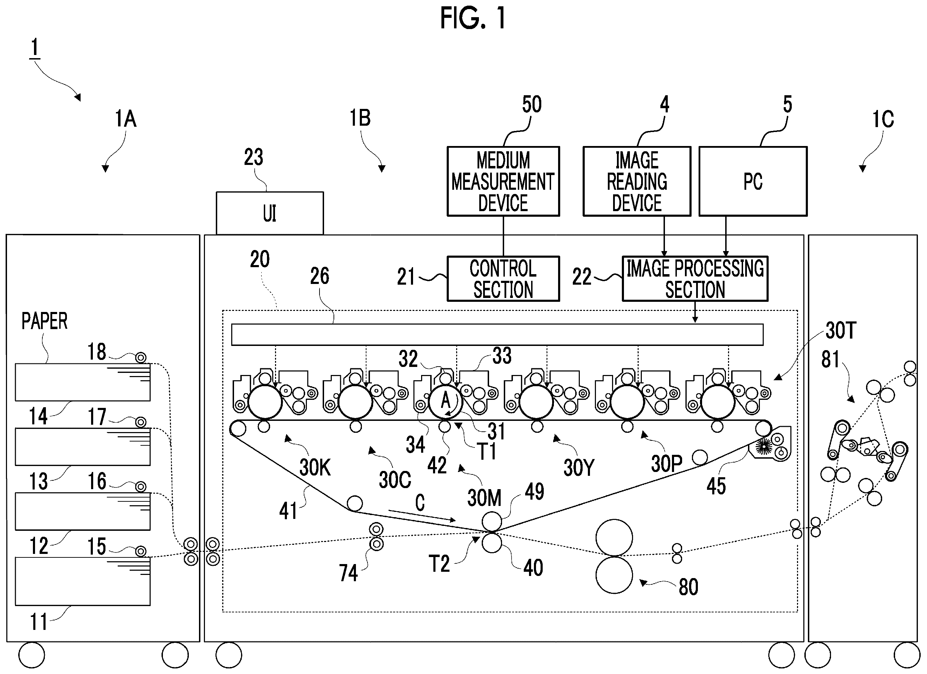

FIG. 1 is a diagram showing an image forming control apparatus 1 to which the present exemplary embodiment is applied.

The image forming control apparatus 1 according to the present exemplary embodiment includes a paper feeding unit 1A, a printing unit 1B, and a paper discharge unit 1C.

The paper feeding unit 1A includes a first paper accommodation section 11 to a fourth paper accommodation section 14 that accommodate paper. In the present exemplary embodiment, paper is used as an example of a recording medium, but, for example, a sheet-like recording medium such as a metal or resin film may be used.

In addition, the paper feeding unit 1A is provided with feed-out rolls 15 to 18 that are provided corresponding to the first paper accommodation section 11 to the fourth paper accommodation section 14 and that feed the paper accommodated in each paper accommodation section to a transport path connected to the printing unit 1B.

In addition, the image forming control apparatus 1 is provided with a medium measurement device 50 that measures a physical property of the paper, outside the image forming control apparatus 1. The medium measurement device 50 may be provided inside the image forming control apparatus 1. For example, the medium measurement device 50 may be provided in the paper feeding unit 1A or may be provided in the transport path of the paper.

The printing unit 1B includes an image forming section 20 that forms the image on the paper. In addition, the printing unit 1B is provided with a control section 21 that controls the sections of the image forming control apparatus 1.

In addition, the printing unit 1B includes an image processing section 22. The image processing section 22 performs image processing on image information transmitted from an image reading device 4 or the personal computer (PC) 5.

In addition, a user interface (UI) 23 that is configured with a touch panel or the like and that notifies a user of information and receives information input from the user is provided in the printing unit 1B.

Six image forming units 30T, 30P, 30Y, 30M, 30C, and 30K (hereinafter, may be simply referred to as "image forming units 30") disposed parallel to each other at constant intervals are provided in the image forming section 20.

Each image forming unit 30 includes a photosensitive drum 31 on which an electrostatic latent image is formed while rotating in an arrow A direction, a charging roll 32 that charges a surface of the photosensitive drum 31, a developing device 33 that develops the electrostatic latent image formed on the photosensitive drum 31, and a drum cleaner 34 that removes a toner or the like on the surface of the photosensitive drum 31.

The image forming section 20 is provided with an exposure device 26 that exposes each photosensitive drum 31 of each image forming unit 30 with laser light.

The exposure of the photosensitive drum 31 by the exposure device 26 is not limited to using the laser light. For example, each image forming unit 30 may be provided with a light source such as a light emitting diode (LED), and the exposure of the photosensitive drum 31 may be performed with light emitted from the light source.

Each image forming unit 30 has the same configuration except for the toner contained in the developing device 33. The image forming units 30Y, 30M, 30C, and 30K form toner images of yellow (Y), magenta (M), cyan (C), and black (K), respectively.

In addition, the image forming units 30T and 30P form toner images using toners such as corporate-color toners, foaming toner for Braille, fluorescent-color toners, and toners that enhance glossiness. In other words, the image forming units 30T and 30P form toner images using a special-color toner.

In addition, the image forming section 20 is provided with an intermediate transfer belt 41 to which the toner image of each color formed on the photosensitive drum 31 of each image forming unit 30 is transferred.

In addition, the image forming section 20 is provided with a primary transfer roll 42 that transfers each color toner image of each image forming unit 30 onto the intermediate transfer belt 41 at a primary transfer section T1.

In addition, the image forming section 20 is provided with a secondary transfer roll 40 that collectively transfers the toner image transferred on the intermediate transfer belt 41 onto the paper by a secondary transfer section T2.

Further, the image forming section 20 is provided with a belt cleaner 45 that removes the toner or the like on the surface of the intermediate transfer belt 41, and a fixing device 80 that fixes the image secondary-transferred on the paper.

The image forming section 20 performs an image forming operation based on a control signal from the control section 21.

Specifically, in the image forming section 20, first, the image processing is performed on the image information, which is input from the image reading device 4 or the PC 5, by the image processing section 22, and the image information after the image processing is performed is supplied to the exposure device 26.

For example, in the image forming unit 30M of magenta (M), after the surface of the photosensitive drum 31 is charged by the charging roll 32, the photosensitive drum 31 is irradiated with the laser light modulated by the image information obtained from the image processing section 22 by the exposure device 26.

As a result, the electrostatic latent image is formed on the photosensitive drum 31.

The formed electrostatic latent image is developed by the developing device 33, and the toner image of magenta is formed on the photosensitive drum 31.

Similarly, the toner images of yellow, cyan, and black are formed in the image forming units 30Y, 30C, and 30K, and the toner image of the special color is formed in the image forming units 30T and 30P.

Each color toner image formed in each image forming unit 30 is sequentially electrostatically transferred onto the intermediate transfer belt 41 rotating in an arrow C direction in FIG. 1 by the primary transfer roll 42, and thus a superimposed toner image is formed on the intermediate transfer belt 41.

The superimposed toner image formed on the intermediate transfer belt 41 is transported to the secondary transfer section T2 that is configured with the secondary transfer roll 40 and a backup roll 49, as the intermediate transfer belt 41 is moved.

Meanwhile, the paper is taken out from the first paper accommodation section 11 by, for example, the feed-out roll 15, and then transported to a position of a registration roll 74 via the transport path.

In a case where the superimposed toner image is transported to the secondary transfer section T2, the paper is supplied from the registration roll 74 to the secondary transfer section T2 in accordance with the transport timing.

Then, at the secondary transfer section T2, the superimposed toner image is electrostatically transferred all at once onto the paper by an effect of a transfer electric field formed between the secondary transfer roll 40 and the backup roll 49.

Then, the paper on which the superimposed toner image is electrostatically transferred is transported to the fixing device 80.

In the fixing device 80, the paper on which the unfixed toner image is formed is pressurized and heated, and fixing processing of the toner image on the paper is performed.

The paper on which the fixing processing is performed passes through a curl correction section 81 provided in the paper discharge unit 1C and is then transported to a paper stacking section (not shown).

### [Description of Medium Measurement Device 50]

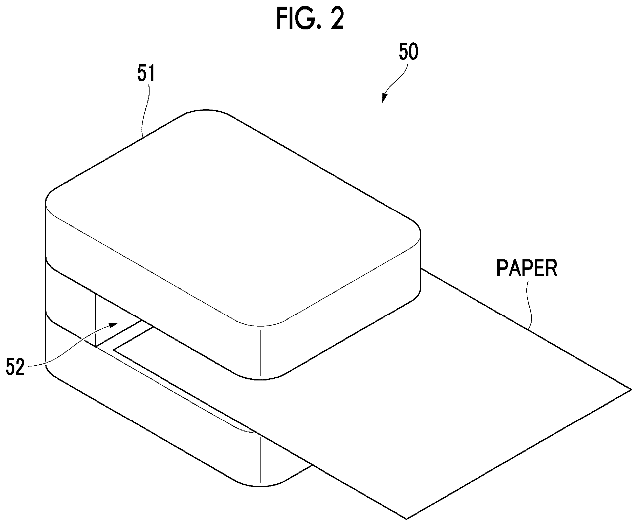

FIG. 2 is a diagram showing the medium measurement device 50. The medium measurement device 50 is configured as a compact box-integrated device including a housing 51 having a plurality of sensors for measuring the physical property of the paper and a gap 52 for inserting the paper. The physical property of the paper is a property for specifying the type of the paper. The medium measurement device 50 measures the physical property of the paper inserted in the gap 52. For example, the housing 51 of the medium measurement device 50 includes an electrical resistance sensor, an ultrasonic sensor, a reflective sensor, a transmissive sensor, and an RGB sensor. The electrical resistance sensor measures an electrical resistance of the paper, and the ultrasonic sensor measures a basis weight of the paper. Further, the reflective sensor measures reflected light of the paper, and the transmissive sensor measures transmitted light of the paper. Furthermore, the RGB sensor measures the color of the paper. That is, examples of the physical property of the paper include the electrical resistance of the paper, the basis weight of the paper, and the color of the paper. In addition, examples of the physical property of the paper include a surface property of the paper estimated from the reflected light of the paper and a thickness of the paper estimated from the transmitted light of the paper.

Then, the medium measurement device 50 outputs a measured value of the physical property of the paper by each sensor included in the housing 51 as a physical property value to the control section 21 (see FIG. 1). For example, in a case where the electrical resistance of the paper is measured, a value in which the unit is Ω is output as the measured value to the control section 21. In addition, for example, in a case where the basis weight of the paper is measured, a value in which g/m² is used as a unit is output as the measured value to the control section 21.

Here, the electrical resistance of the paper, the basis weight of the paper, the color of the paper, the surface property of the paper, and the thickness of the paper are physical properties determined in advance as greatly affecting an image quality in a case of forming the image on the recording medium. The physical property value, which is the measured value of the physical property, is a value for which a parameter related to image formation needs to be adjusted in accordance with the physical property value. For example, the electrical resistance of the paper is a property related to the electrostatic transfer by the secondary transfer section T2, and a parameter of a transfer voltage needs to be adjusted in accordance with the value of the electrical resistance.

### [Hardware Configuration]

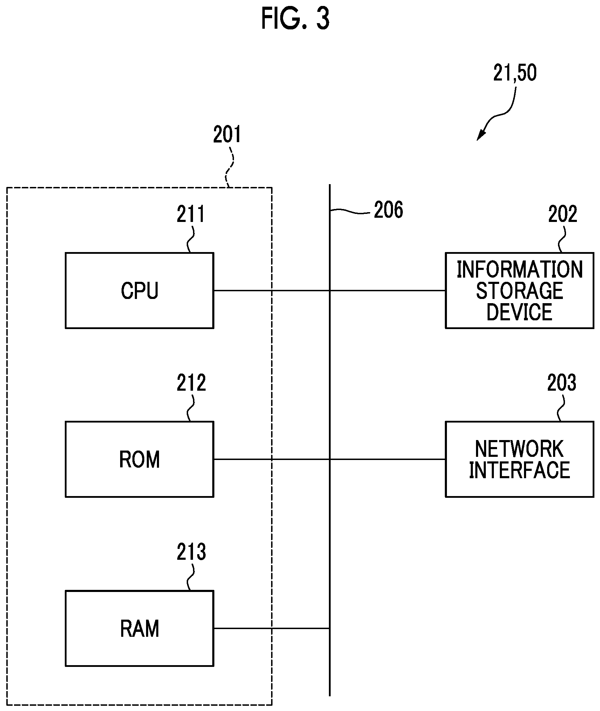

FIG. 3 shows a hardware configuration of the control section 21 and the medium measurement device 50. As shown in FIG. 3, a computer that implements the control section 21 and the medium measurement device 50 includes a processing section 201 that executes digital arithmetic processing in accordance with a program. In addition, the computer that implements the control section 21 and the medium measurement device 50 includes an information storage device 202 that stores information. In addition, the computer that implements the control section 21 and the medium measurement device 50 includes a network interface 203 that realizes communication via a local area network (LAN) cable or the like.

The processing section 201 is configured by a computer. The processing section 201 includes a central processing unit (CPU) 211 as an example of a processor that executes various types of processing. In addition, the processing section 201 includes a read-only memory (ROM) 212 in which a program is stored and a random-access memory (RAM) 213 used as a work area. The information storage device 202 is implemented using existing devices such as a hard disk drive, a semiconductor memory, and a magnetic tape. The processing section 201, the information storage device 202, and the network interface 203 are connected through a bus 206 or a signal line (not shown).

The program executed by the CPU 211 may be provided to the control section 21 in a state in which the program is stored in a computer-readable recording medium such as a magnetic recording medium (magnetic tape, magnetic disk, or the like), an optical recording medium (optical disk or the like), an optical magnetic recording medium, or a semiconductor memory. In addition, the program executed by the CPU 211 may be provided to the control section 21 using communication means such as the Internet.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### [Functional Configuration of Control Section 21]

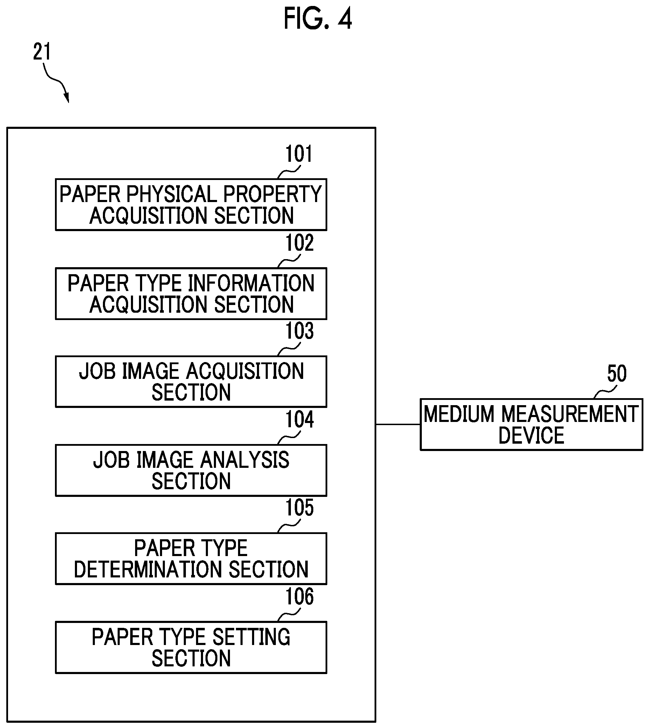

FIG. 4 is a functional configuration diagram of the control section 21. The control section 21 includes a paper physical property acquisition section 101 that acquires the physical property value of the paper from the medium measurement device 50. The control section 21 includes a paper type information acquisition section 102 that acquires paper type information that is information on the type of the paper based on the physical property value. The control section 21 includes a job image acquisition section 103 that acquires a job image as the image information to be formed on the paper from the image reading device 4 or the personal computer (PC) 5. In addition, the control section 21 includes a job image analysis section 104 that analyzes a feature value of a job image that is an example of an image amount. In addition, the control section 21 includes a paper type determination section 105 that determines the type of the paper based on the paper type information. In addition, the control section 21 includes a paper type setting section 106 that sets a setting condition for the image formation on the type of the paper based on a determination result of the paper type determination section 105 or based on the paper type information and the feature value of the job image.

### [Flow of Processing of Control Section 21]

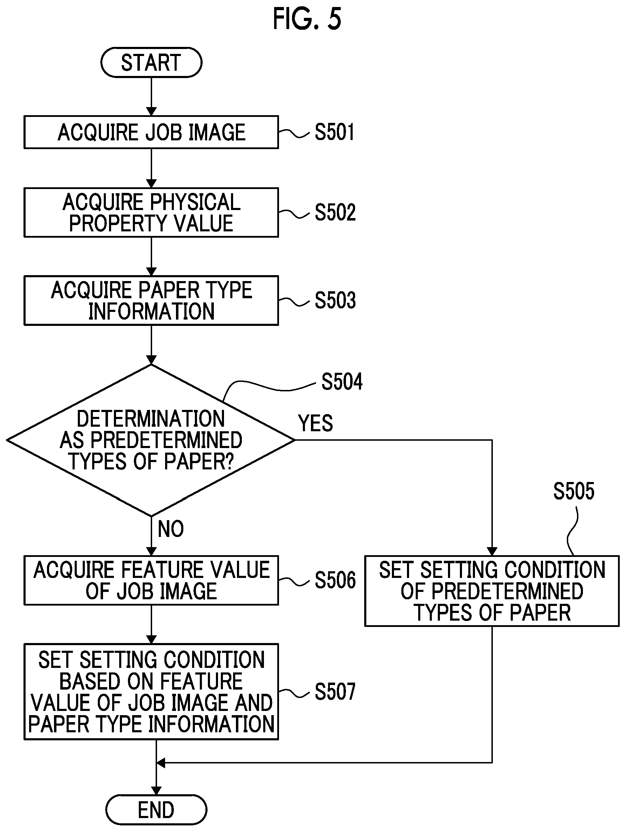

FIG. 5 is a flowchart showing a flow of processing of the control section 21 in a case of setting the setting condition for the image formation on the type of the paper. First, the job image acquisition section 103 of the control section 21 acquires the job image from the image reading device 4 or the personal computer (PC) 5 (step S501). Then, the paper physical property acquisition section 101 acquires the physical property value of the paper from the medium measurement device 50 (step S502). Then, the paper type information acquisition section 102 acquires the paper type information that is information on the type of the paper from the physical property value (step S503).

Next, the paper type determination section 105 determines whether or not the paper type information is determined as predetermined types of the paper (step S504). In a case where the paper type information is determined as the predetermined types of the paper (YES in step S504), the paper type setting section 106 sets the setting condition for the image formation on the determined type of the paper (step S505). In a case where the paper type information is not determined as the predetermined types of the paper (NO in step S504), the job image analysis section 104 acquires the feature value of the job image acquired by the job image acquisition section 103 (step S506). Then, the paper type setting section 106 sets the setting condition for the image formation on any one of the predetermined types of the paper based on the feature value of the job image and the paper type information (step S507).

The predetermined types of the paper in the present exemplary embodiment include paper distinguished by paper for which the setting condition changes or may change in a case of forming an image. In addition, for example, the paper is paper that is distinguished by whether the surface of the paper is unprocessed or is processed in some ways. In addition, even in a case where the paper is processed in some ways, the paper is distinguished by the type of the processing. Here, examples of the predetermined types of the paper include uncoated paper, embossed paper, coated paper, and matte coated paper. The uncoated paper is paper of which a surface is not coated. The embossed paper is paper that is processed to have various raised and recessed patterns on a surface. The coated paper is paper of which a surface is smoothly coated with a coating material. The matte coated paper is paper that is coated to have less glossiness than coated paper.

### [Setting Condition for Image Formation on Predetermined Types of Paper]

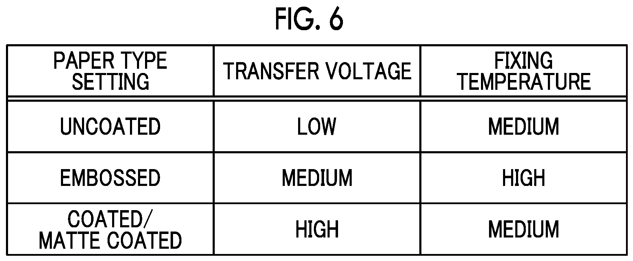

FIG. 6 is a diagram showing the setting condition for the image formation on the predetermined types of the paper by a paper type setting section 106. As shown in FIG. 6, as setting conditions for the image formation on the predetermined types of the paper, there are a setting condition in a case of "uncoated paper", a setting condition in a case of "embossed paper", and a setting condition in a case of "coated paper/matte coated paper". Then, a "transfer voltage" and a "fixing temperature", which are parameters that affect the image quality such as color reproduction, are set at different levels in accordance with the feature of the type of the paper of each setting condition. For example, in a case of the uncoated paper having a lower electrical resistance than other types of the paper, "low" is set as the parameter "transfer voltage" and "medium" is set as the parameter "fixing temperature". In addition, for example, in a case of the embossed paper in which toner is less likely to be fixed as compared with other types of the paper, "medium" is set as the parameter "transfer voltage", and "high" is set as the parameter "fixing temperature". Further, for example, in a case of the coated paper/matte coated paper having a higher electrical resistance than other types of the paper, "high" is set as the parameter "transfer voltage" and "medium" is set as the parameter "fixing temperature". Other parameters such as paper feeding may be used as the parameter that affects the image quality.

### [Analysis of Feature Value of Job Image]

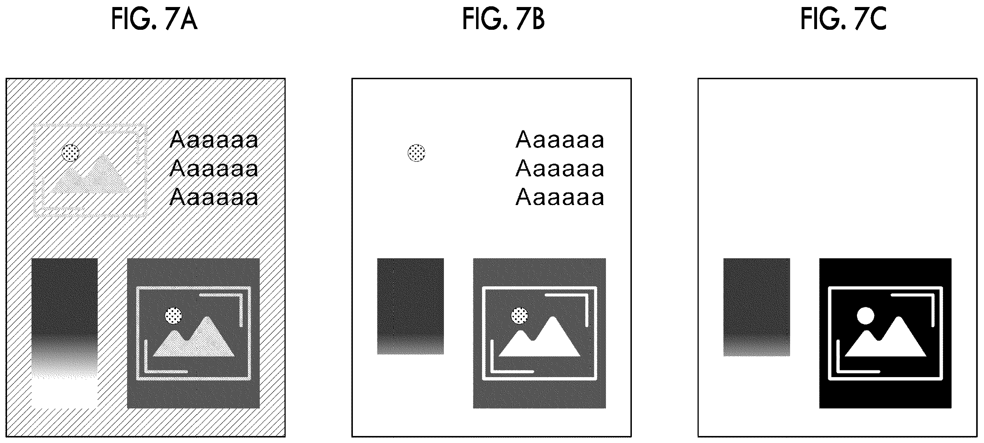

FIGS. 7A to 7C are diagrams showing analysis of the feature value of the job image in the job image analysis section 104. FIG. 7A is the job image acquired from an input job. FIG. 7B is the job image in which processing based on a density of the image is performed. FIG. 7C is the job image in which processing based on an area of the image is performed. The density of the image or the area of the image is an example of the feature value of the job image. In the job images shown in FIGS. 7A to 7C, a plurality of images such as a text image, a background image, a graphic, and a photograph are displayed, and the density of these images and the area of the images are different from each other.

The job image analysis section 104 performs the processing based on the density of the image on the job image shown in FIG. 7A. Specifically, the job image analysis section 104 uses a coverage rate indicating a ratio of an amount of toner used for one pixel, to perform processing of masking a pixel such that a total of coverage rates of the respective toners of CMYK is 100 or less. By this processing, in FIG. 7B, the background image, the graphic, or the like having the coverage rate of 100 or less is masked in the image shown in FIG. 7A.

Next, the job image analysis section 104 performs the processing based on the area of the image on the job image shown in FIG. 7B. Specifically, the job image analysis section 104 performs processing of leaving an image in which regions having close CMYK values are connected and an area of the connected regions is equal to or greater than a predetermined value. In FIG. 7C, an image in which an area in which the regions having close CMYK values are connected is, for example, 2 cm² or more is displayed, and the text image or an image of fine patterns is masked. The image displayed in FIG. 7C may be referred to as a "solid image". The solid image is an image in which an image quality defect such as dropout due to a transfer failure or a fixing failure are conspicuous as compared with an image other than the solid image, and is an image that greatly affects the appearance in a case of being viewed as the entire job image.

### [Acquisition of Paper Type Information]

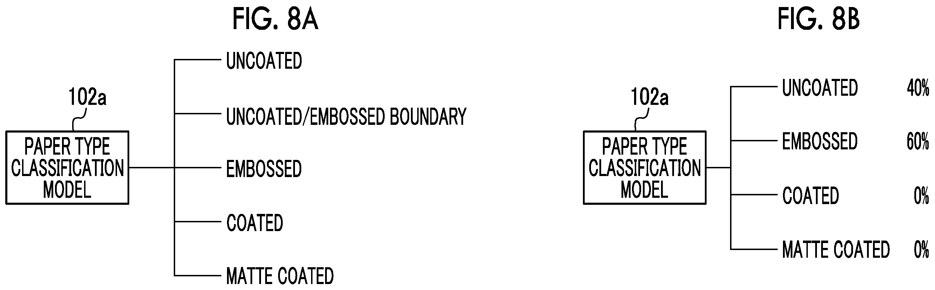

FIGS. 8A and 8B are diagrams showing examples of acquisition of the paper type information by the paper type information acquisition section 102. FIG. 8A is an example of acquiring information indicating that the paper does not belong to any one of the predetermined types of the paper. FIG. 8B is an example in which a probability that the paper belongs to any one of the predetermined types is acquired. A paper type classification model 102a shown in FIGS. 8A and 8B is an example of the paper type information acquisition section 102, and is a learning model that has learned the physical properties of the predetermined types of the paper using a random forest. The physical properties of the predetermined types of the paper are the electrical resistance, the basis weight, the color, the surface property, and the thickness of the uncoated paper, the embossed paper, the coated paper, and the matte coated paper.

As shown in FIG. 8A, the paper type classification model 102a acquires the physical property value acquired from the paper physical property acquisition section 101, and outputs the paper type information based on the physical properties of the predetermined types of the paper. Examples of the paper type information include information indicating the paper belongs to any one of the predetermined types of the paper. For example, in FIG. 8A, as the information indicating that the paper belongs to any one of the predetermined types of the paper, information indicating the uncoated paper, the embossed paper, the coated paper, or the matte coated paper is output. In addition, examples of the paper type information include information indicating that the paper does not belong to any one of the predetermined types of the paper. For example, in FIG. 8A, information indicating that the paper does not belong to any one of the predetermined types of the paper is output as information indicating that the paper belongs to an uncoated paper/embossed paper boundary. The information indicating that the paper belongs to the uncoated paper/embossed paper boundary indicates that the paper has physical properties of both the uncoated paper and the embossed paper, and indicates that the type of the paper cannot be discriminated only by the acquired physical property value of the paper.

Here, a case is assumed in which the paper type classification model 102a outputs information indicating that the paper belongs to the uncoated paper/embossed paper boundary shown in FIG. 8A. In this case, the paper type setting section 106 selects the uncoated paper and the embossed paper as candidates for the paper, and switches the setting condition for the uncoated paper or the setting condition for the embossed paper based on the feature value of the job image described in FIGS. 7A to 7C. For example, in a case where the largest area of the solid image among the solid images shown in FIG. 7C is 5 cm² or more, the paper type setting section 106 performs the setting under the setting condition for the embossed paper. In addition, for example, in a case where the largest area of the solid image among the solid images shown in FIG. 7C is 5 cm² or less, the paper type setting section 106 sets the setting condition for the uncoated paper. That is, in a case where the solid image is large and the image quality defect such as the dropout is likely to be conspicuous, the image formation is performed under the setting condition of the embossed paper in which the transfer voltage or the fixing temperature is set to be higher than the setting condition for the uncoated paper in which the image quality defect such as the dropout is suppressed. In addition, in a case where the solid image is small and the image quality defect such as the dropout is less likely to be conspicuous, the image formation is performed under the setting condition for the uncoated paper in which the transfer voltage or the fixing temperature is set to be lower than the setting condition for the embossed paper in which the color reproduction is improved.

As shown in FIG. 8B, the paper type classification model 102a grasps the probability that the paper belongs to any one of the predetermined types based on the physical property value. For example, in FIG. 8B, it is estimated that the paper of which the physical property value is measured belongs to the uncoated paper at a ratio of 40% and the embossed paper at a ratio of 60% based on the physical property value acquired from the paper physical property acquisition section 101. Then, the same processing as in a case where the information indicating that the paper belongs to the uncoated paper/embossed paper boundary is output in FIG. 8A is executed by the paper type setting section. Specifically, the paper type setting section 106 selects the uncoated paper or the embossed paper as the candidate, and switches the setting to the setting condition for the uncoated paper or the setting condition for the embossed paper based on the feature value of the job image.

**In** FIG. 8A and FIG. 8B, in a case where the paper type classification model 102a outputs information indicating that the paper is paper having a highly uneven surface as compared with other types of the paper, the setting may be switched based on the feature value of the job image. For example, in a case where the paper type classification model 102a outputs information indicating the paper belongs to paper other than the coated paper, the setting may be switched based on the feature value of the job image. In addition, for example, in a case where the paper type classification model 102a outputs information indicating the paper of which the smoothness, which is a degree of surface property, is equal to or greater than a predetermined value, the setting may be switched based on the feature value of the job image.

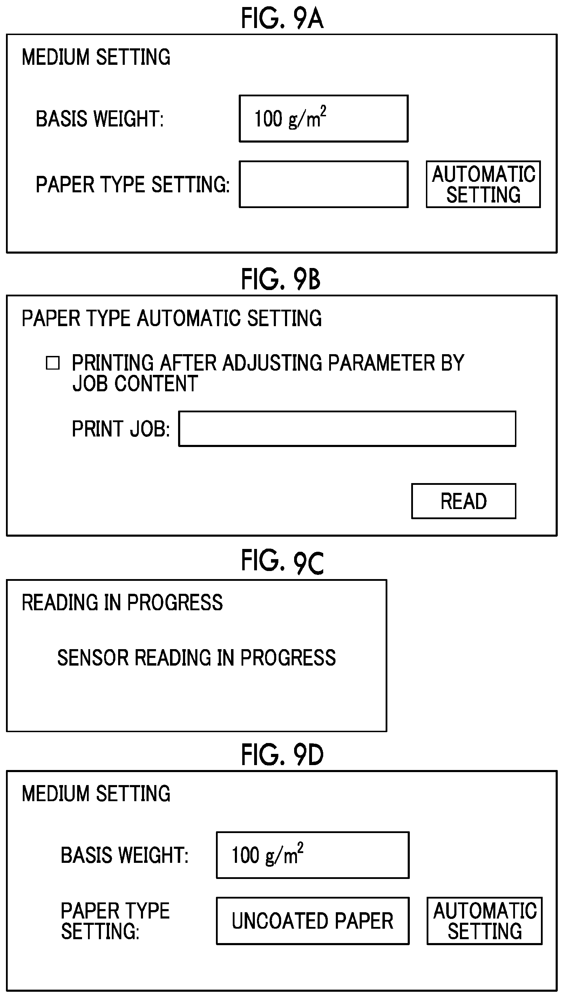

FIGS. 9A to 9D are display screens in a case where the feature value of the job image is acquired in a case of setting the setting condition for the image formation on the type of the paper. FIG. 9A is a setting screen in a case where the type of the paper is set. FIG. 9B is a setting screen in a case where the type of the paper is automatically set. FIG. 9C is a reading screen in a case where the type of the paper is read by the medium measurement device 50. FIG. 9D is a setting screen after the setting condition for the image formation on the type of the paper is set based on the feature value of the job image and the physical property of the paper.

In FIG. 9A, "basis weight", "paper type setting", and "automatic setting" are displayed. A right field of the basis weight is an input field for the basis weight of the paper. The "paper type setting" is an input field for the type of the paper. In FIG. 9A, in a case where the user presses an "automatic setting" button, a "print job" is displayed as shown in FIG. 9B. In FIG. 9B, the user inputs the content of the job image in a right field of the "print job", and checks a check box on a left side of "printing after adjusting the parameter by the job content". In a case where the user presses a "read" button, the screen of FIG. 9C is displayed, and the acquisition of the physical property value of the paper by the medium measurement device 50 is started. The screen of FIG. 9C is a screen showing that the acquisition of the physical property value, the acquisition of the paper type information, the acquisition of the feature value of the job image, and the setting of the setting condition for the image formation on the type of the paper based on the paper type information and the feature value of the job image, which are shown in FIG. 5, are executed by the functions of the control section 21. In a case where the setting of the setting condition for the image formation on the type of the paper is completed, the screen shown in FIG. 9D is displayed. In FIG. 9D, the setting condition for "uncoated paper" is automatically set in the input field of "paper type setting". Although, in FIG. 9A, the user inputs the basis weight, the basis weight may be automatically set in a case where the physical property value is acquired by the medium measurement device 50 and the setting condition for the image formation on the paper type is set.

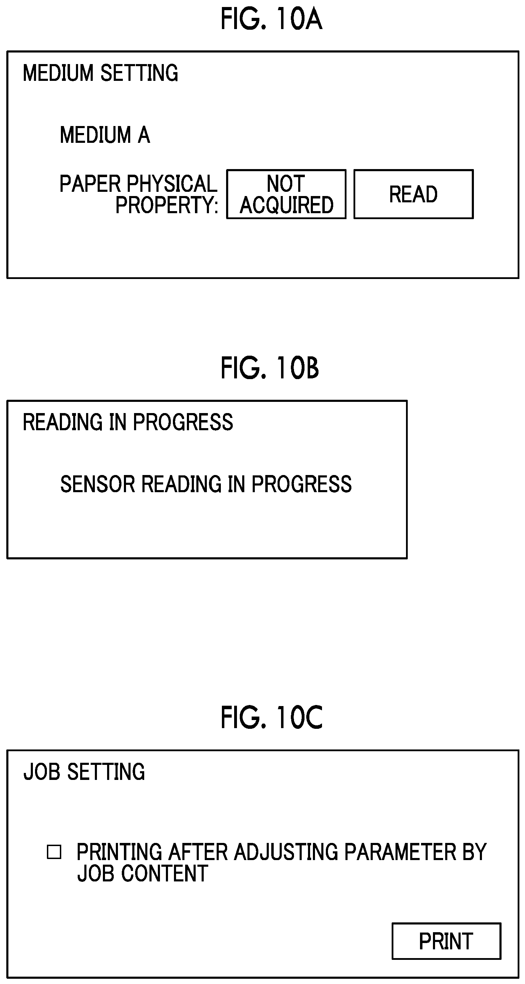

FIGS. 10A to 10C are display screens in a case where the setting condition for the type of the paper is changed without displaying the setting condition on the display screen in a case of performing the image formation. FIG. 10A is a screen showing whether or not the physical property of the type of the paper is acquired. FIG. 10B is a reading screen in a case where the physical property of the type of the paper is read. FIG. 10C is a setting screen of the print job in a case where the paper is printed.

In FIG. 10A, "medium A" is displayed as the type of the paper. Then, it is displayed that the "paper physical property" of the "medium A" is "not acquired". In a case where the user presses the "read" button, the screen shown in FIG. 10B is displayed, and the acquisition of the physical property value of the paper by the medium measurement device 50 is started. FIG. 10B shows that the paper physical property acquisition section 101 acquires the physical property value of the paper, and the paper type information acquisition section 102 acquires the paper type information. In a case where the acquisition of the paper type information ends, the screen shown in FIG. 10C is displayed. In FIG. 10C, the phrase "printing after adjusting the parameter by the job content" is displayed, and the check box is displayed on the left side of the phrase. In a case where the user checks the check box and presses the "print" button, the setting condition is automatically set by the paper type setting section 106 based on the feature value of the job image and the paper type information. Then, even in a case where the setting condition is switched by the feature value of the job image, the image formation is executed without displaying the setting condition.

### <Supplementary Note>

(((1))) An image forming control apparatus comprising:
   a processor configured to:
   acquire image information to be formed on a recording medium;
   acquire a physical property value related to a physical property of the recording medium; and
   execute control of forming an image corresponding to a type of the recording medium based on the image information and the physical property value.
(((2))) The image forming control apparatus according to (((1))),
   wherein the processor is configured to:
   acquire recording medium type information that is information on the type of the recording medium from the physical property value; and
   execute, in a case where the acquired recording medium type information is not determined as predetermined types of recording media, control of forming the image under a setting condition for any one of the predetermined types of the recording media based on the acquired image information.
(((3))) The image forming control apparatus according to (((2))),
   wherein the image information is information indicating an image amount, and
   the processor is configured to:
      switch the setting condition in accordance with the image amount.
(((4))) The image forming control apparatus according to (((2))),
   wherein the processor is configured to:
   grasp, in a case where the recording medium type information is not determined as the predetermined types of the recording media, a probability that the recording medium belongs to any one of the predetermined types of the recording media from the physical property value; and
   execute control of forming the image under the setting condition for any one of the predetermined types of the recording media based on the grasped probability.
(((5))) The image forming control apparatus according to (((4))),
   wherein the predetermined types are each any one of uncoated paper, embossed paper, coated paper, or matte coated paper, and
   the processor is configured to:
      select, as a candidate, the recording medium of the one of the uncoated paper, embossed paper, the coated paper, or the matte coated paper based on the probability, and execute control of forming the image under the setting condition for forming the image on the recording medium of the one of the uncoated paper, embossed paper, the coated paper, or the matte coated paper based on information indicating an image amount in the image information.
(((6))) The image forming control apparatus according to (((1))),
   wherein the physical property value is a physical property determined in advance as greatly affecting an image quality in a case where the image is formed on the recording medium.
(((7))) The image forming control apparatus according to (((6))),
   wherein the physical property value is a value of at least any one of a basis weight, a smoothness, an electrical resistance, or a thickness of the recording medium, and
   the processor is configured to:
      execute control of forming the image corresponding to the type of the recording medium based on the image information and the value.

With the image forming control apparatus according to (((1))), even in a case where there is the recording medium having the characteristics that do not fit the set type of the recording medium, the image that is close to the image forming condition desired by the user may be formed.

With the image forming control apparatus according to (((2))),the setting condition that is close to the image forming condition desired by the user may be set in consideration of the characteristics of the image.

With the image forming control apparatus according to (((3))), the setting may be switched to the setting condition for suppressing an image quality defect in accordance with the image amount.

With the image forming control apparatus according to (((4))), the setting condition may be accurately set for the recording medium of which the type is ambiguous.

With the image forming control apparatus according to (((5))), the options of the setting condition may be narrowed down from a wide variety of recording media, and the setting condition to be used among the options may be switched in consideration of the characteristics of the image.

With the image forming control apparatus according to (((6))), the control of the image formation may be efficiently performed by intensively evaluating the physical property value that greatly affects the image quality.

With the image forming control apparatus according to (((7))), advanced image formation corresponding to the type of the medium may be achieved by combining a plurality of physical property values.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

21: control section
50: medium measurement device
101: paper physical property acquisition section
102: paper type information acquisition section
103: job image acquisition section
104: job image analysis section
105: paper type determination section
106: paper type setting section

## Claims

1. An image forming control apparatus comprising:
a processor configured to:
acquire image information to be formed on a recording medium;
acquire a physical property value related to a physical property of the recording medium; and
execute control of forming an image corresponding to a type of the recording medium based on the image information and the physical property value.

2. The image forming control apparatus according to claim 1,
wherein the processor is configured to:
acquire recording medium type information that is information on the type of the recording medium from the physical property value; and
execute, in a case where the acquired recording medium type information is not determined as predetermined types of recording media, control of forming the image under a setting condition for any one of the predetermined types of the recording media based on the acquired image information.

3. The image forming control apparatus according to claim 2,
wherein the image information is information indicating an image amount, and
the processor is configured to:
switch the setting condition in accordance with the image amount.

4. The image forming control apparatus according to claim 2,
wherein the processor is configured to:
grasp, in a case where the recording medium type information is not determined as the predetermined types of the recording media, a probability that the recording medium belongs to any one of the predetermined types of the recording media from the physical property value; and
execute control of forming the image under the setting condition for any one of the predetermined types of the recording media based on the grasped probability.

5. The image forming control apparatus according to claim 4,
wherein the predetermined types are each any one of uncoated paper, embossed paper, coated paper, or matte coated paper, and
the processor is configured to:
select, as a candidate, the recording medium of the one of the uncoated paper, embossed paper, the coated paper, or the matte coated paper based on the probability, and execute control of forming the image under the setting condition for forming the image on the recording medium of the one of the uncoated paper, embossed paper, the coated paper, or the matte coated paper based on information indicating an image amount in the image information.

6. The image forming control apparatus according to claim 1,
wherein the physical property value is a physical property determined in advance as greatly affecting an image quality in a case where the image is formed on the recording medium.

7. The image forming control apparatus according to claim 6,
wherein the physical property value is a value of at least any one of a basis weight, a smoothness, an electrical resistance, or a thickness of the recording medium, and
the processor is configured to:
execute control of forming the image corresponding to the type of the recording medium based on the image information and the value.
